# EUROPÄISCHE PATENTANMELDUNG

(11) **EP 4 494 924 A1**
(43) Veröffentlichungstag der Anmeldung: **22.01.2025**
(21) Anmeldenummer: 23186191.5
(22) Anmeldetag: 18.07.2023
(51) Int. Cl.: B60L 53/67, B60L 53/68

(54) **ZENTRAL GESTEUERTES VERFAHREN ZUM BUCHEN EINER LADESTATION FÜR EIN ELEKTROFAHRZEUG**

(71) Anmelder: Deutsche Telekom AG, 53113 Bonn (DE)
(72) Erfinder: SUDHOLT, Frank, 53604 Bad Honnef (DE); SCHMITT, Florian-Leon, 53227 Bonn (DE)
(74) Vertreter: RDL Patentanwälte PartG mbB

(57) **Zusammenfassung**

Verfahren zum Buchen einer Ladestation für ein Elektrofahrzeug, bei dem ein Elektrofahrzeug in einem vorbestimmten Straßennetz auf einer ermittelten einen Zielort mit einem Startort verbindenden Fahrstrecke fährt und eine gebuchte von der ermittelten Fahrstrecke als ein Wegepunkt umfasste Ladestation während eines gebuchten Ladezeitfensters das Elektrofahrzeug lädt, sowie stationärer zentraler Vergabeserver und Computerprogrammprodukt.

## Beschreibung

Die Erfindung betrifft ein Verfahren zum Buchen einer Ladestation für ein Elektrofahrzeug, bei dem ein Elektrofahrzeug in einem vorbestimmten Straßennetz auf einer ermittelten einen Zielort mit einem Startort verbindenden Fahrstrecke fährt und eine gebuchte von der ermittelten Fahrstrecke als ein Wegepunkt umfasste Ladestation während eines gebuchten Ladezeitfensters das Elektrofahrzeug lädt. Ferner betrifft die Erfindung einen stationären zentralen Vergabeserver und ein Computerprogrammprodukt.

Das Elektrofahrzeug umfasst wie üblich eine Traktionsbatterie, einen Traktionsmotor und eine Leistungselektronik, welche aus einem von der Traktionsbatterie bereitgestellten Gleichstrom einen Wechselstrom erzeugt und den erzeugten Wechselstrom für den Traktionsmotor bereitstellt. Das Elektrofahrzeug ist beispielsweise ein Personenkraftwagen, kurz Pkw, ein Lastkraftwagen, kurz Lkw, ein Bus und dergleichen. Das Laden des Elektrofahrzeugs ist genauer gesagt ein Laden der Traktionsbatterie.

Die Fahrstrecke umfasst eine Mehrzahl von Straßen des vorbestimmten Stra-ßennetzes, auf denen das Elektrofahrzeug ausgehend von dem Startort in einer bestimmten Abfolge bis zu dem Zielort fährt. Selbstverständlich umfasst das vorbestimmte Straßennetz im Allgemeinen eine Mehrzahl von alternativen Fahrstrecken, die jeweils den Zielort mit dem Startort verbinden.

Das vorbestimmte Straßennetz umfasst ferner eine Mehrzahl von Ladestationen, die jeweils an einer Straße des vorbestimmten Straßennetzes angeordnet sind und Wegepunkte von Fahrstrecken sein können. Unter einem Wegepunkt einer Fahrstrecke ist ein Ort zu verstehen, welchen das Elektrofahrzeug während der Fahrt unmittelbar passiert.

Die Ladestation kann eine Mehrzahl von Ladeanschlüssen, beispielsweise Ladesäulen, umfassen und ein gleichzeitiges Laden mehrerer Elektrofahrzeuge ermöglichen. Verschiedene Ladestationen und/oder verschiedene Ladeanschlüsse einer Ladestation können überdies verschiedene maximale Ladeleistungen bereitstellen.

Es versteht sich, dass nicht an jeder Straße des vorbestimmten Straßennetzes eine Ladestation angeordnet ist. Vielmehr ist eine Flächendichte der Ladestationen bezogen auf das vorbestimmte Straßennetz im Vergleich zu herkömmlichen Tankstellen gering und wird sich wohl nur allmählich vergrößern.

Wenn eine Fahrstrecke eines Elektrofahrzeugs länger ist als eine an einem Startort der Fahrstrecke vorhandene Reichweite des Elektrofahrzeugs, muss das Elektrofahrzeug unterwegs geladen werden, um den Zielort der Fahrstrecke zu erreichen.

Allerdings dauert das Laden des Elektrofahrzeugs deutlich länger als ein herkömmlicher Tankvorgang eines Fahrzeugs mit einem Verbrennungsmotor und erfordert einen entsprechend längeren Stillstand des Elektrofahrzeugs an der Ladestation. Mit anderen Worten muss die Fahrt des Elektrofahrzeugs für eine relevante Ladedauer unterbrochen werden, die eine Dauer der Fahrt des Elektrofahrzeugs von dem Startort zu dem Zielort deutlich verlängert. Wenn an der optimalen Fahrstrecke des Elektrofahrzeugs keine geeignete Ladestation angeordnet ist, muss das Elektrofahrzeug einen Umweg fahren, d.h. eine Verlängerung der ursprünglich vorgesehenen Fahrstrecke in Kauf nehmen.

Die Ladedauer hängt im Wesentlichen von einer maximalen Ladeleistung der Ladestation und/oder des Elektrofahrzeugs einerseits und von einer elektrischen Energiemenge, die für eine verbleibende Fahrstrecke von der Ladestation zu dem Zielort benötigt wird, andererseits ab. Das Ladezeitfenster ist eine Zeitspanne, welche die Ladedauer umfasst und mit einer Ankunft des Elektrofahrzeugs an der Ladestation beginnt. Mit anderen Worten ist unter dem Ladezeitfenster ein terminierter Zeitraum zu verstehen, in dem das Elektrofahrzeug von der Ladestation geladen werden kann.

Ein besonderes Ärgernis für einen Fahrer des Elektrofahrzeugs entsteht, wenn die angesteuerte Ladestation bei der Ankunft des Elektrofahrzeugs besetzt ist, d.h. während des benötigten Ladezeitfensters keinen durchgehend freien Ladeanschluss aufweist. Dann verlängert sich der Stillstand an der Ladestation um eine Wartezeit, bis ein Ladeanschluss der Ladestation frei wird und ein Laden des Elektrofahrzeugs beginnen kann. Schlimmstenfalls muss sich das Elektrofahrzeug in eine Warteschlange der Ladestation einreihen, wenn früher eingetroffene weitere Elektrofahrzeuge bereits ihrerseits auf einen freien Ladeanschluss der Ladestation warten.

Eine Verlängerung des Stillstands des Elektrofahrzeugs kann alternativ oder zusätzlich daraus resultieren, dass die von der angesteuerten Ladestation bereitgestellte maximale Ladeleistung geringer ist als eine maximale Ladeleistung des Elektrofahrzeugs. In diesem Fall dauert das Laden des Elektrofahrzeugs länger als technisch nötig. Abgesehen davon kann ein großer Umweg des Elektrofahrzeugs zum Ansteuern der Ladestation lästig sein und die Dauer der Fahrt verlängern.

Es ist daher eine Aufgabe der Erfindung, ein Verfahren zum Buchen einer Ladestation für ein Elektrofahrzeug vorzuschlagen, das einen unnötigen Umweg des Elektrofahrzeugs zum Ansteuern der Ladestation und eine unnötige Stillstandszeit des Elektrofahrzeugs an der Ladestation vermeidet. Weitere Aufgaben der Erfindung sind, einen stationären zentralen Vergabeserver und ein Computerprogrammprodukt bereitzustellen.

Ein Gegenstand der Erfindung ist ein Verfahren zum Buchen einer Ladestation für ein Elektrofahrzeug, bei dem ein Elektrofahrzeug in einem vorbestimmten Straßennetz auf einer ermittelten einen Zielort mit einem Startort verbindenden Fahrstrecke fährt und eine gebuchte von der ermittelten Fahrstrecke als ein Wegepunkt umfasste Ladestation während eines gebuchten Ladezeitfensters das Elektrofahrzeug lädt. Die gebuchte Ladestation hält während des gebuchten Ladezeitraums einen Ladeanschluss der Ladestation für das Elektrofahrzeug frei. Beispielsweise kann die Ladestation eine digitale Buchungsfunktionalität aufweisen. Mittels der digitalen Buchungsfunktionalität kann ein Fahrer des Elektrofahrzeugs bereits vor einer Ankunft des Elektrofahrzeugs an der Ladestation ein passendes Ladezeitfenster online buchen, wenn zumindest ein Ladeanschluss der Ladestation während des passenden Ladezeitfensters frei ist.

Erfindungsgemäß überträgt das Elektrofahrzeug zu Beginn der Fahrt eine die Fahrt definierende Ladeanfrage mittels eines Mobilfunknetzes zu einem stationären zentralen Vergabeserver, ermittelt der stationäre zentrale Vergabeserver abhängig von der übertragenen Ladeanfrage eine Ladestation und ein Ladezeitfenster und bucht der stationäre zentrale Vergabeserver automatisch die ermittelte Ladestation während des ermittelten Ladezeitfensters für das Elektrofahrzeug, wenn das Elektrofahrzeug den stationären zentralen Vergabeserver für ein automatisches Buchen vorab autorisiert hat. Die übertragene Ladeanfrage informiert den stationären zentralen Vergabeserver über die bevorstehende Fahrt des Elektrofahrzeugs. Der stationäre zentrale Vergabeserver verwaltet eine Mehrzahl von Ladestationen und eine Mehrzahl von Ladezeitfenstern der mehreren Ladestationen und kennt jede vorhandene Buchung, d.h. jede gebuchte Ladestation und jedes gebuchte Ladezeitfenster. Infolgedessen kann der zentrale Vergabeserver die Ladestation und das Ladezeitfenster ermitteln, die am besten zu der Ladeanfrage des Elektrofahrzeugs passen.

Die Ladestation passt zu der Ladeanfrage, wenn sie keinen oder einen möglichst kleinen Umweg des Elektrofahrzeugs verursacht. Das Ladezeitfenster passt zu der Ladeanfrage, wenn das Ladezeitfenster mit der Ankunft des Elektrofahrzeugs oder möglichst früh nach der Ankunft des Elektrofahrzeugs an der Ladestation beginnt. Auf diese Weise werden ein unnötiger Umweg des Elektrofahrzeugs und eine unnötige Stillstandszeit des Elektrofahrzeugs an der Ladestation vermieden.

Das automatische Buchen erfolgt unmittelbar und verbindlich. Auf diese Weise wird keine Ladestation und kein Ladezeitfenster unnötig blockiert. Entsprechend werden konkurrierende Buchungen weiterer an dem Verfahren teilnehmender Elektrofahrzeuge durch die Ladeanfrage des Elektrofahrzeugs so wenig wie möglich eingeschränkt.

Die ermittelte Ladestation und das ermittelte Ladezeitfenster werden dem Elektrofahrzeug so früh wie möglich zugewiesen. Eine von dem Mobilfunknetz bereitgestellte drahtlose Verbindung weist eine geringe Latenz auf, was praktisch eine bidirektionale Echtzeitkommunikation des Elektrofahrzeugs und des stationären zentralen Vergabeservers ermöglicht. Das Mobilfunknetz ist beispielsweise als ein 4G-Netz, ein 5G-Netz oder ein Mobilfunknetz einer folgenden Generation ausgebildet.

Bevorzugt ermittelt der stationäre zentrale Vergabeserver abhängig von der übertragenen Ladeanfrage eine Ladestation und ein Ladezeitfenster, reserviert der stationäre zentrale Vergabeserver automatisch die ermittelte Ladestation während des ermittelten Ladezeitfensters für das Elektrofahrzeug und überträgt der stationäre zentrale Vergabeserver eine die reservierte Ladestation, das reservierte Ladezeitfenster und eine Buchungsfrist umfassende Autorisierungsanfrage mittels des Mobilfunknetzes zu dem Elektrofahrzeug, wenn das Elektrofahrzeug den stationären zentralen Vergabeserver für ein automatisches Buchen vorab nicht autorisiert hat. Die reservierte Ladestation ist während der Buchungsfrist für weitere an dem Verfahren teilnehmende Elektrofahrzeuge nicht buchbar, d.h. konkurrierende Buchungen der weiteren Elektrofahrzeuge sind durch das Reservieren eingeschränkt.

Allerdings hängt die Relevanz der Einschränkung von einer Länge der Buchungsfrist ab. Das an dem Verfahren mitwirkende Mobilfunknetz ermöglicht allerdings eine kurze Buchungsfrist, was mit einer geringen Einschränkung konkurrierender Buchungen einhergeht.

Die Buchungsfrist kann als eine Zeitspanne oder als ein spätester Zeitpunkt angegeben sein, während derer bzw. bis zu dem ein Buchen erfolgen muss. Die beiden Alternativen sind gleichwertig. Eine Anzeigevorrichtung des Elektrofahrzeugs kann einen bereits abgelaufenen Teil der Zeitspanne durch Inkrementieren eines Zählers, beispielsweise eines Sekundenzählers, und eine noch verbleibende Zeit bis zu dem spätesten Zeitpunkt durch Dekrementieren eines Zählers, beispielsweise eines Sekundenzählers, für den Fahrer des Fahrzeugs anzeigen.

Idealerweise überträgt das Elektrofahrzeug nach dem Empfangen der Autorisierungsanfrage und während der Buchungsfrist eine Buchungsanfrage zum Buchen der reservierten Ladestation während des reservierten Ladezeitfensters mittels des Mobilfunknetzes zu dem stationären zentralen Vergabeserver und bucht der stationäre zentrale Vergabeserver nach dem Empfangen der Buchungsanfrage unverzüglich die reservierte Ladestation während des reservierten Ladezeitfensters für das Elektrofahrzeug. Ohne eine Vorabautorisierung erfolgt die verbindliche Buchung der Ladestation und des Ladezeitfensters demnach höchstens um die Buchungsfrist später als mit der Vorabautorisierung.

Vorteilhaft gibt der stationäre zentrale Vergabeserver die reservierte Ladestation während des reservierten Ladezeitfensters frei, wenn der stationäre zentrale Vergabeserver während der Buchungsfrist von dem Elektrofahrzeug eine Buchungsanfrage zum Buchen der reservierten Ladestation während des reservierten Ladezeitfensters nicht empfängt. Nach dem erfolglosen Ablauf der Buchungsfrist löscht der stationäre zentrale Vergabeserver unverzüglich die Reservierung, wodurch eine Einschränkung konkurrierender Buchungen weiterer Elektrofahrzeuge aufgehoben wird.

Der stationäre zentrale Vergabeserver kann eine Mehrzahl von Ladestationen und/oder Ladezeitfenstern ermitteln, reservieren und mit der Buchungsanfrage zu dem Elektrofahrzeug übertragen, das Elektrofahrzeug kann eine übertragene Ladestation und/oder ein übertragenes Ladezeitfenster bestimmen und eine Buchungsanfrage zum Buchen der bestimmten Ladestation und/oder des bestimmten Ladefensters mittels des Mobilfunknetzes zu dem stationären zentralen Vergabeserver übertragen und der stationäre zentrale Vergabeserver kann die übertragene bestimmte Ladestation und/oder das übertragene bestimmte Ladezeitfenster für das Elektrofahrzeug buchen und jede nicht bestimmte reservierte Ladestation und/oder jedes nicht bestimmte reservierte Ladezeitfenster unverzüglich freigeben. In einem Fall überlässt der stationäre zentrale Vergabeserver dem Elektrofahrzeug ein Auswählen der anzusteuernden Ladestation. Die anzusteuernde Ladestation kann beispielsweise abhängig von einer bereitgestellten Ladeleistung und/oder einer Länge des Umwegs zum Ansteuern der Ladestation ausgewählt werden. In einem anderen Fall erfordert die Fahrstrecke zwei oder mehr Stillstandszeiten des Elektrofahrzeugs an zwei oder mehr verschiedenen Ladestationen.

Je größer die Mehrzahl von ermittelten Ladestation und/oder Ladezeitfenstern ist, desto länger wird die Buchungsfrist gewählt. Für ein Auswählen der Ladestation und/oder des Ladezeitfensters aus den mehreren Ladestationen und/oder Ladezeitfenstern ist mehr Zeit nötig als für ein Bestätigen einer einzigen Ladestation bzw. eines einzigen Ladezeitfensters. Beispielsweise kann der stationäre zentrale Vergabeserver drei Ladestationen und jeweils zugehörige Ladezeitfenster ermitteln.

Günstigerweise überträgt der stationäre zentrale Vergabeserver nach jedem Buchen eine die gebuchte Ladestation und das gebuchte Ladezeitfenster anzeigende Buchungsbestätigung über das Mobilfunknetz zu dem Elektrofahrzeug. Die Buchungsbestätigung zeigt dem Elektrofahrzeug, genauer gesagt dem Fahrer des Elektrofahrzeugs, den Erfolg des Verfahrens an. Ebenso kann die Buchungsbestätigung dem Fahrer des Elektrofahrzeugs anzeigen, dass keine Buchung erfolgt ist, d.h. ein Ende des Verfahrens ohne eine Buchung.

In einer Ausführungsform umfasst das Ermitteln der Ladestation und/oder des Ladezeitfensters ein Ermitteln der Fahrstrecke und ein Übertragen der ermittelten Fahrstrecke mittels des Mobilfunknetzes zu dem Elektrofahrzeug. Ein Routing-Modul des stationären zentralen Vergabeservers kann die Fahrstrecke ermitteln. Diese Ausführungsform bewährt sich, wenn die von dem Routing-Modul ermittelte Fahrstrecke im Wesentlichen mit einer von einem Routing-Modul des Elektrofahrzeugs ermittelten Fahrstrecke übereinstimmt. Das Routing-Modul des Elektrofahrzeugs wird von einem Ermitteln der Fahrstrecke entlastet.

Insbesondere kann eine Mehrzahl von den Zielort mit dem Startort verbindenden und verschiedene Ladestationen als Wegepunkte umfassenden Fahrstrecken ermittelt und mittels des Mobilfunknetzes zu dem Elektrofahrzeug übertragen werden und kann das Elektrofahrzeug aus den übertragenen Fahrstrecken die Fahrstrecke bestimmen und jede nicht bestimmte Fahrstrecke verwerfen. Mit der bestimmten Fahrstrecke bestimmt das Elektrofahrzeug auch die als ein Wegepunkt der Fahrstrecke ermittelte Ladestation. Der stationäre zentrale Vergabeserver überlässt dem Elektrofahrzeug ein Auswählen der Fahrstrecke.

Alternativ kann das Elektrofahrzeug die Fahrstrecke abhängig von der übertragenen gebuchten Ladestation ermitteln. Das Routing-Modul des Elektrofahrzeugs gehört üblicherweise zu einem Navigationssystem des Elektrofahrzeugs. Das Routing-Modul stellt die gebuchte Ladestation als einen Wegepunkt der Fahrstrecke ein. Bei dieser Ausführungsform kommt der stationäre zentrale Vergabeserver ohne ein Routing-Modul aus.

Die Ladeanfrage definiert die Fahrt beispielsweise anhand des Zielorts und des Startorts ohne eine Fahrstrecke oder anhand einer Fahrstrecke mit dem Zielort und dem Startort. In dem ersten Fall überlässt das Elektrofahrzeug dem stationären zentralen Vergabeserver das Ermitteln der Fahrstrecke. Entsprechend muss der stationäre zentrale Vergabeserver ein Routing-Modul umfassen. In dem zweiten Fall muss der zentrale Vergabeserver lediglich die Ladestation und/oder das Ladezeitfenster ermitteln und braucht kein Routing-Modul zu umfassen.

Ferner kann die Ladeanfrage eine technische Ladeinformation des Elektrofahrzeugs, einen das Ermitteln der Fahrstrecke betreffenden Routenparameter und/oder einen Wegepunkt der Fahrstrecke umfassen. Die technische Ladeinformation des Elektrofahrzeugs umfasst beispielsweise eine maximale Ladeleistung des Elektrofahrzeugs. Zu den Routenparametern gehören beispielsweise Optimierungsbedingungen wie "kürzeste Fahrstrecke" oder "schnellste Fahrstrecke" oder Ausschlussbedingungen wie "keine Mautstraßen" oder "keine Autobahnen". Die Fahrstrecke kann von einer Ladestation verschiedene Wegepunkte umfassen, beispielsweise Orte von Sehenswürdigkeiten oder Geschäften. Die genannten von der Ladeanfrage umfassten weiteren Informationen sind nicht abschließend und genau dann notwendig, wenn der stationäre zentrale Vergabeserver eine oder mehrere Fahrstrecken ermittelt.

Vorteilhaft empfängt der stationäre zentrale Vergabeserver von der Ladestation eine technische Ladeinformation der Ladestation und/oder fortlaufend einen aktuellen Betriebsstatus der Ladestation und ermittelt der stationäre zentrale Vergabeserver abhängig von der empfangenen technischen Ladeinformation und/oder dem empfangenen aktuellen Betriebsstatus die Ladestation und das Ladezeitfenster. Zusätzlich zu der Ladeanfrage berücksichtigt der stationäre zentrale Vergabeserver technische Merkmale und einen Betriebszustand der Ladestation. Zu den technischen Merkmalen gehört beispielsweise eine von der Ladestation bereitgestellte maximale Ladeleistung. Der Betriebszustand kann beispielsweise einen Normalbetrieb der Ladestation, einen eingeschränkten Betrieb der Ladestation, insbesondere mit einer reduzierten Ladeleistung, oder einen Nicht-Betrieb der Ladestation, insbesondere aufgrund eines Defekts, anzeigen. Je nach der Ladeanfrage kann der stationäre zentrale Vergabeserver Ladestationen ausschließen, die aus technischen Gründen ungeeignet sind.

Das Ermitteln der Fahrstrecke kann ein Modifizieren einer Fahrstrecke abhängig von der gebuchten Ladestation umfassen. Wenn die ermittelte Ladestation kein Wegepunkt einer ursprünglichen Fahrstrecke ist, wird die ursprüngliche Fahrstrecke derart modifiziert, dass die ermittelte Ladestation ein Wegepunkt der ermittelten Fahrstrecke ist. Im Allgemeinen umfasst die ermittelte Fahrstrecke gegenüber der ursprünglichen Fahrstrecke einen Umweg zum Ansteuern der ermittelten Ladestation. Je nach Ausführungsform können der stationäre zentrale Vergabeserver oder das Elektrofahrzeug die ursprüngliche Fahrstrecke modifizieren.

Die Fahrstrecke kann abhängig von einer Konfiguration automatisch oder abhängig von einer Eingabe manuell bestimmt werden. Der Fahrer des Elektrofahrzeugs kann mittels einer Eingabe das Elektrofahrzeug manuell konfigurieren, die Fahrstrecke abhängig von einer Konfigurationseinstellung automatisch zu bestimmen. Die Konfigurationseinstellung kann beispielsweise vorsehen, die Fahrstrecke mit dem geringsten Umweg oder die Fahrstrecke mit der kürzesten Ladedauer zu bestimmen. Anstelle einer Konfigurationseinstellung kann der Fahrer die bestimmte Fahrstrecke mittels der Eingabe auch direkt manuell bestimmen.

Die Eingabe kann mittels eines Infotainmentsystems des Elektrofahrzeugs erfolgen. Das Infotainmentsystem ist konfiguriert, dem Elektrofahrzeug, insbesondere dem Fahrer des Elektrofahrzeugs, ein Mitwirken an dem erfindungsgemäßen Verfahren zu ermöglichen. Die Konfiguration des Infotainmentsystems kann beispielsweise entsprechende dedizierte Menüeinträge und/oder virtuelle Bedienelemente umfassen.

Noch ein Gegenstand der Erfindung ist ein stationärer zentraler Vergabeserver. Der stationäre zentrale Vergabeserver ist mit einer Ladestation und mit einem Mobilfunknetz verbunden und ausgebildet, mit der Ladestation und mittels des Mobilfunknetzes mit einem Elektrofahrzeug zu kommunizieren.

Erfindungsgemäß ist der stationäre zentrale Vergabeserver konfiguriert, zusammen mit einer Ladestation, einem Elektrofahrzeug und einem Mobilfunknetz ein Verfahren nach einer Ausführungsform der Erfindung auszuführen. Der stationäre zentrale Vergabeserver vermeidet einen unnötigen Umweg des Elektrofahrzeugs zum Ansteuern der Ladestation und eine unnötige Stillstandszeit des Elektrofahrzeugs an der Ladestation.

Ein weiterer Gegenstand der Erfindung ist ein Computerprogrammprodukt, umfassend ein digitales Speichermedium mit einem Programmcode. Das digitale Speichermedium kann als ein Compact Disk, CD, ein Digital Versatile Disk, DVD, ein Universal Serial Bus, USB, Stick, ein Random Access Memory, RAM, Chip, eine Festplatte, HD, ein Cloud-Speicher und dergleichen ausgebildet sein.

Erfindungsgemäß veranlasst der Programmcode eine Rechenvorrichtung, als der stationäre zentrale Vergabeserver zusammen mit einer Ladestation, einem Elektrofahrzeug und einem Mobilfunknetz ein Verfahren nach einer Ausführungsform der Erfindung auszuführen, wenn der Programmcode von der Rechenvorrichtung ausgeführt wird. Die Rechenvorrichtung wird mittels des Computerprogrammprodukts in die Lage versetzt, an einem erfindungsgemäßen Verfahren als der stationäre zentrale Vergabeserver mitzuwirken.

Ein wesentlicher Vorteil des erfindungsgemäßen Verfahrens besteht darin, dass unnötige Umwege von Elektrofahrzeugen zum Ansteuern von Ladestationen und unnötige Stillstandszeiten der Elektrofahrzeuge an den Ladestationen zuverlässig verhindert werden. Infolgedessen wird eine Zufriedenheit von Fahrern der Elektrofahrzeuge gesteigert.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Entitätendiagramm einen stationären zentralen Vergabeserver nach einer Ausführungsform der Erfindung.
- Fig. 2: in einem Sequenzdiagramm einen ersten Teil eines Verfahren nach einer Ausführungsform der Erfindung zum Buchen einer Ladestation für ein Elektrofahrzeug;
- Fig. 3: in einem Sequenzdiagramm einen zweiten Teil des in Figur 2 gezeigten Verfahrens.

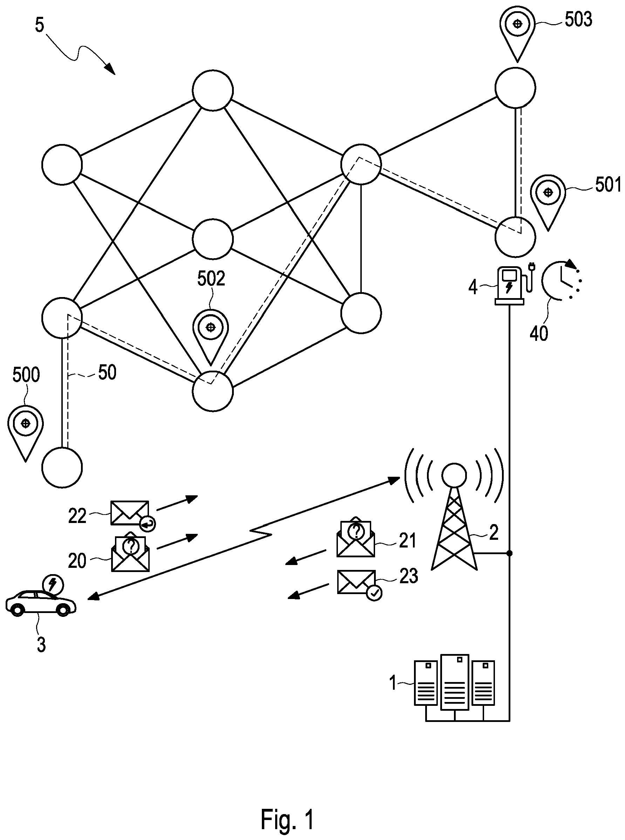

Fig. 1 zeigt in einem Entitätendiagramm einen stationären zentralen Vergabeserver 1 nach einer Ausführungsform der Erfindung. Der stationäre zentrale Vergabeserver 1 ist konfiguriert, zum Buchen der Ladestation 4 zusammen mit einer Ladestation 4, einem Elektrofahrzeug 3 und einem Mobilfunknetz 2 ein Verfahren nach einer Ausführungsform der Erfindung auszuführen.

Der stationäre zentrale Vergabeserver 1 kann mittels eines Computerprogrammprodukts implementiert sein, das ein digitales Speichermedium mit einem Programmcode umfasst. Der Programmcode veranlasst eine Rechenvorrichtung, als der stationäre zentrale Vergabeserver 1 zusammen mit der Ladestation 4, dem Elektrofahrzeug 3 und dem Mobilfunknetz 2 das erfindungsgemäße Verfahren wie folgt auszuführen, wenn der Programmcode von der Rechenvorrichtung ausgeführt wird.

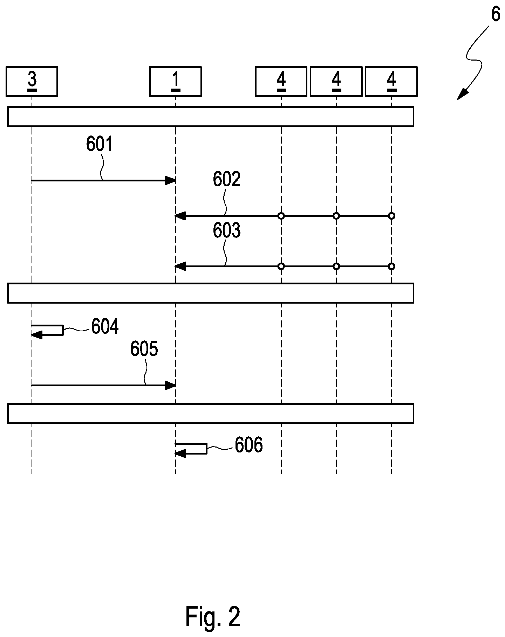

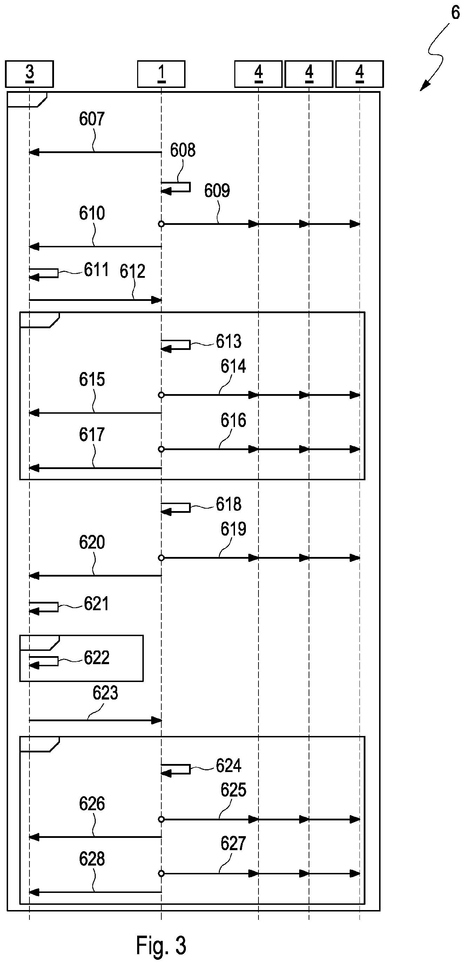

Fig. 2 zeigt in einem Sequenzdiagramm einen ersten Teil eines Verfahrens 6 nach einer Ausführungsform der Erfindung zum Buchen einer Ladestation 4 für das Elektrofahrzeug 3. Fig. 3 zeigt in einem Sequenzdiagramm einen zweiten Teil des in Figur 2 gezeigten Verfahrens 6.

Das Elektrofahrzeug 3 kann sich bei dem zentralen Vergabeserver 1 registrieren 601. Die Ladestation 4 kann sich bei dem zentralen Vergabeserver 1 registrieren 602. Das Elektrofahrzeug 3 bestimmt 604 bevorzugt eine Fahrt.

Zu Beginn der Fahrt überträgt 605 das Elektrofahrzeug 3 eine die Fahrt definierende Ladeanfrage 20 mittels des Mobilfunknetzes 2 zu dem stationären zentralen Vergabeserver 1. Die Ladeanfrage 20 kann die Fahrt anhand eines Zielorts 503 und eines Startorts 500 ohne eine Fahrstrecke 50 oder anhand einer Fahrstrecke 50 mit dem Zielort 503 und dem Startort 500 definieren.

Ferner kann die Ladeanfrage 20 eine technische Ladeinformation des Elektrofahrzeugs 3, einen das Ermitteln der Fahrstrecke 50 betreffenden Routenparameter und/oder einen Wegepunkt 502 der Fahrstrecke 50 umfassen.

Der stationäre zentrale Vergabeserver 1 ermittelt 606, 618 abhängig von der übertragenen Ladeanfrage 20 eine Ladestation 4 und ein Ladezeitfenster 40.

Der stationäre zentrale Vergabeserver 1 empfängt 603 vorteilhaft zudem von der Ladestation 4 eine technische Ladeinformation der Ladestation 4 und/oder fortlaufend einen aktuellen Betriebsstatus der Ladestation 4 und ermittelt die Ladestation 4 und das Ladezeitfenster 40 ferner abhängig von der empfangenen technischen Ladeinformation und/oder dem empfangenen aktuellen Betriebsstatus.

Das Ermitteln 606 der Ladestation 4 und/oder des Ladezeitfensters 40 kann ein Ermitteln 608, 613, 624 der Fahrstrecke 50 und ein Übertragen 610 der ermittelten Fahrstrecke 50 mittels des Mobilfunknetzes 2 zu dem Elektrofahrzeug 3 umfassen. Insbesondere werden eine Mehrzahl von den Zielort 503 mit dem Startort 500 verbindenden und verschiedene Ladestationen 4 als Wegepunkte 501 umfassenden Fahrstrecken 50 ermittelt 608 und mittels des Mobilfunknetzes 2 zu dem Elektrofahrzeug 3 übertragen 610. Das Elektrofahrzeug 3 kann dann aus den übertragenen Fahrstrecken 50 die Fahrstrecke 50 bestimmen 611, 622 und jede nicht bestimmte Fahrstrecke 50 verwerfen.

Alternativ kann das Elektrofahrzeug 3 die Fahrstrecke 50 abhängig von der übertragenen gebuchten Ladestation 4 ermitteln.

Jedes Ermitteln der Fahrstrecke 50 kann ein Modifizieren 621 einer Fahrstrecke 50 abhängig von der gebuchten Ladestation 4 umfassen. Die Fahrstrecke 50 wird insbesondere abhängig von einer Konfiguration automatisch oder abhängig von einer Eingabe manuell bestimmt.

Wenn das Elektrofahrzeug 3 den stationären zentralen Vergabeserver 1 für ein automatisches Buchen vorab autorisiert hat, bucht der stationäre zentrale Vergabeserver 1 automatisch die ermittelte Ladestation 4 während des ermittelten Ladezeitfensters 40 für das Elektrofahrzeug 3.

Wenn das Elektrofahrzeug 3 den stationären zentralen Vergabeserver 1 für ein automatisches Buchen vorab nicht autorisiert hat, kann der stationäre zentrale Vergabeserver 1 automatisch die ermittelte Ladestation 4 während des ermittelten Ladezeitfensters 40 für das Elektrofahrzeug 3 reservieren 609, 619 und eine Autorisierungsanfrage 21 mittels des Mobilfunknetzes 2 zu dem Elektrofahrzeug 3 übertragen 610, 620, welche die reservierte Ladestation 4, das reservierte Ladezeitfenster 40 und eine Buchungsfrist umfasst

Nach dem Empfangen der Autorisierungsanfrage 21 und während der Buchungsfrist überträgt 623 das Elektrofahrzeug 3 bevorzugt eine Buchungsanfrage 22 zum Buchen der reservierten Ladestation 4 während des reservierten Ladezeitfensters 40 mittels des Mobilfunknetzes 2 zu dem stationären zentralen Vergabeserver 1. Der stationäre zentrale Vergabeserver 1 kann nach dem Empfangen der Buchungsanfrage 22 unverzüglich die reservierte Ladestation 4 während des reservierten Ladezeitfensters 40 für das Elektrofahrzeug 3 buchen 614, 625.

Idealerweise überträgt 607, 615, 617, 626, 628 der stationäre zentrale Vergabeserver 1 nach jedem Buchen eine Buchungsbestätigung 23 über das Mobilfunknetz 2 zu dem Elektrofahrzeug 3, welche die gebuchte Ladestation 4 und das gebuchte Ladezeitfenster 40 anzeigt.

Wenn der stationäre zentrale Vergabeserver 1 während der Buchungsfrist von dem Elektrofahrzeug 3 eine Buchungsanfrage 22 zum Buchen der reservierten Ladestation 4 während des reservierten Ladezeitfensters 40 nicht empfängt, gibt 616, 627 der stationäre zentrale Vergabeserver 1 die reservierte Ladestation 4 während des reservierten Ladezeitfensters 40 bevorzugt unverzüglich frei.

Der stationäre zentrale Vergabeserver 1 kann auch eine Mehrzahl von Ladestationen 4 und/oder Ladezeitfenstern 40 ermitteln, reservieren und mit der Buchungsanfrage 21 zu dem Elektrofahrzeug 3 übertragen. Das Elektrofahrzeug 3 kann dann eine übertragene Ladestation 4 und/oder ein übertragenes Ladezeitfenster 40 bestimmen 611 und während der Buchungsfrist die Buchungsanfrage 22 zum Buchen der bestimmten Ladestation 4 und/oder des bestimmten Ladefensters 40 mittels des Mobilfunknetzes 2 zu dem stationären zentralen Vergabeserver 1 übertragen 612. Der stationäre zentrale Vergabeserver 1 bucht 614, 625 die übertragene bestimmte Ladestation 4 und/oder das übertragene bestimmte Ladezeitfenster 40 für das Elektrofahrzeug 3 und gibt 614, 625 jede nicht bestimmte reservierte Ladestation 4 und/oder jedes nicht bestimmte reservierte Ladezeitfenster 40 unverzüglich frei.

Das Elektrofahrzeug 3 fährt in einem vorbestimmten Straßennetz 5 auf einer ermittelten Fahrstrecke 50, die einen Zielort 503 mit einem Startort 500 verbindet. Die ermittelte Fahrstrecke 50 umfasst die gebuchte Ladestation 4 als einen Wegepunkt 501.

Während des gebuchten Ladezeitfensters 40 lädt die gebuchte Ladestation 4 das Elektrofahrzeug 3.

### Bezugszeichenliste

- 1: stationärer zentraler Vergabeserver
- 2: Mobilfunknetz
- 20: Ladeanfrage
- 21: Autorisierungsanfrage
- 22: Buchungsanfrage
- 23: Buchungsbestätigung
- 3: Elektrofahrzeug
- 4: Ladestation
- 40: Ladezeitfenster
- 5: vorbestimmtes Straßennetz
- 50: Fahrstrecke
- 500: Startort
- 501: Wegepunkt
- 502: Wegepunkt
- 503: Zielort
- 6: Verfahren
- 601: Registrieren eines Elektrofahrzeugs
- 602: Registrieren einer Ladestation
- 603: Empfangen einer Information/einesBetriebsstatus
- 604: Bestimmen einer Fahrt
- 605: Übertragen einer Ladeanfrage
- 606: Ermitteln einer Ladestation/eines Ladezeitfensters
- 607: Übertragen einer Buchungsbestätigung
- 608: Ermitteln einer Fahrstrecke
- 609: Reservieren einer Ladestation/eines Ladezeitfensters
- 610: Übertragen einer Autorisierungsanfrage/einer Ladestation/eines Ladezeitfensters
- 611: Bestimmen einer Fahrstrecke
- 612: Übertragen einer bestimmten Ladestation/eines bestimmten Ladezeitfensters
- 613: Ermitteln einer Fahrstrecke
- 614: Buchen und Freigeben von reservierten Ladestation/Ladezeitfenstern
- 615: Übertragen einer Buchungsbestätigung
- 616: Freigeben einer reservierten Ladestation
- 617: Übertragen einer Buchungsbestätigung
- 618: Ermitteln einer Ladestation/eines Ladezeitfensters
- 619: Reservieren einer Ladestation/eine Ladezeitfensters
- 620: Übertragen einer Autorisierungsanfrage
- 621: Modifizieren der Fahrstrecke
- 622: Bestimmen einer Fahrstrecke
- 623: Übertragen einer Buchungsanfrage
- 624: Ermitteln einer Fahrstrecke
- 625: Buchen und Freigeben von reservierten Ladestationen/Ladezeitfenstern
- 626: Übertragen einer Buchungsbestätigung
- 627: Freigeben der reservierten Ladestation
- 628: Übertragen einer Buchungsbestätigung

## Patentansprüche

1. Verfahren zum Buchen einer Ladestation (4) für ein Elektrofahrzeug (3), bei dem
- ein Elektrofahrzeug (3) in einem vorbestimmten Straßennetz (5) auf einer ermittelten einen Zielort (503) mit einem Startort (500) verbindenden Fahrstrecke (50) fährt;
- eine gebuchte von der ermittelten Fahrstrecke (50) als ein Wegepunkt (501) der Fahrstrecke umfasste Ladestation (4) während eines gebuchten Ladezeitfensters (40) das Elektrofahrzeug (3) lädt;
- das Elektrofahrzeug (3) zu Beginn der Fahrt eine die Fahrt definierende Ladeanfrage (20) mittels eines Mobilfunknetzes (2) zu einem stationären zentralen Vergabeserver (1) überträgt;
- der stationäre zentrale Vergabeserver (1) abhängig von der übertragenen Ladeanfrage (20) eine Ladestation (4) und ein Ladezeitfenster (40) ermittelt und automatisch die ermittelte Ladestation (4) während des ermittelten Ladezeitfensters (40) für das Elektrofahrzeug (3) bucht, wenn das Elektrofahrzeug (3) den stationären zentralen Vergabeserver (1) für ein automatisches Buchen vorab autorisiert hat.

2. Verfahren nach Anspruch 1, bei dem der stationäre zentrale Vergabeserver (3) abhängig von der übertragenen Ladeanfrage (20) eine Ladestation (4) und ein Ladezeitfenster (40) ermittelt, automatisch die ermittelte Ladestation (4) während des ermittelten Ladezeitfensters (40) für das Elektrofahrzeug (3) reserviert und eine die reservierte Ladestation (4), das reservierte Ladezeitfenster (40) und eine Buchungsfrist umfassende Autorisierungsanfrage (21) mittels des Mobilfunknetzes (2) zu dem Elektrofahrzeug (3) überträgt, wenn das Elektrofahrzeug (3) den stationären zentralen Vergabeserver (1) für ein automatisches Buchen vorab nicht autorisiert hat.

3. Verfahren nach Anspruch 2, bei dem das Elektrofahrzeug (3) nach dem Empfangen der Autorisierungsanfrage (21) und während der Buchungsfrist eine Buchungsanfrage (22) zum Buchen der reservierten Ladestation (4) während des reservierten Ladezeitfensters (40) mittels des Mobilfunknetzes (2) zu dem stationären zentralen Vergabeserver (1) überträgt und der stationäre zentrale Vergabeserver (1) nach dem Empfangen der Buchungsanfrage (22) unverzüglich die reservierte Ladestation (4) während des reservierten Ladezeitfensters (40) für das Elektrofahrzeug (3) bucht.

4. Verfahren nach Anspruch 2 oder 3, bei dem der stationäre zentrale Vergabeserver (1) die reservierte Ladestation (4) während des reservierten Ladezeitfensters (40) unverzüglich freigibt, wenn der stationäre zentrale Vergabeserver (1) während der Buchungsfrist von dem Elektrofahrzeug (3) eine Buchungsanfrage (22) zum Buchen der reservierten Ladestation (4) während des reservierten Ladezeitfensters (40) nicht empfängt.

5. Verfahren nach einem der Ansprüche 2 bis 4, bei dem der stationäre zentrale Vergabeserver (1) eine Mehrzahl von Ladestationen (4) und/oder Ladezeitfenstern (40) ermittelt, reserviert und mit der Buchungsanfrage (21) zu dem Elektrofahrzeug (3) überträgt, das Elektrofahrzeug (3) eine übertragene Ladestation (4) und/oder ein übertragenes Ladezeitfenster (40) bestimmt und während der Buchungsfrist eine Buchungsanfrage (22) zum Buchen der bestimmten Ladestation (4) und/oder des bestimmten Ladefensters (40) mittels des Mobilfunknetzes (2) zu dem stationären zentralen Vergabeserver (1) überträgt und der stationäre zentrale Vergabeserver (1) die übertragene bestimmte Ladestation (4) und/oder das übertragene bestimmte Ladezeitfenster (40) für das Elektrofahrzeug (3) bucht und jede nicht bestimmte reservierte Ladestation (4) und/oder jedes nicht bestimmte reservierte Ladezeitfenster (40) unverzüglich freigibt.

6. Verfahren nach einem der Ansprüche 1 bis 5, bei dem der stationäre zentrale Vergabeserver (1) nach jedem Buchen eine die gebuchte Ladestation (4) und das gebuchte Ladezeitfenster (40) anzeigende Buchungsbestätigung (23) über das Mobilfunknetz (2) zu dem Elektrofahrzeug (3) überträgt.

7. Verfahren nach einem der Ansprüche 1 bis 6, bei dem das Ermitteln der Ladestation (4) und/oder des Ladezeitfensters (40) ein Ermitteln der Fahrstrecke (50) und ein Übertragen der ermittelten Fahrstrecke (50) mittels des Mobilfunknetzes (2) zu dem Elektrofahrzeug (3) umfasst.

8. Verfahren nach einem der Ansprüche 1 bis 7, bei dem eine Mehrzahl von den Zielort (503) mit dem Startort (500) verbindenden und verschiedene Ladestationen (4) als Wegepunkte (501) umfassenden Fahrstrecken (50) ermittelt und mittels des Mobilfunknetzes (2) zu dem Elektrofahrzeug (3) übertragen werden und das Elektrofahrzeug (3) aus den übertragenen Fahrstrecken (50) die Fahrstrecke (50) bestimmt und jede nicht bestimmte Fahrstrecke (50) verwirft.

9. Verfahren nach einem der Ansprüche 1 bis 6, bei dem das Elektrofahrzeug (3) die Fahrstrecke (50) abhängig von der übertragenen gebuchten Ladestation (4) ermittelt.

10. Verfahren nach einem der Ansprüche 1 bis 9, bei dem die Ladeanfrage (20) die Fahrt anhand des Zielorts (503) und des Startorts (500) ohne eine Fahrstrecke (50) oder anhand einer Fahrstrecke (50) mit dem Zielort (503) und dem Startort (500) definiert.

11. Verfahren nach einem der Ansprüche 1 bis 10, bei dem die Ladeanfrage (20) eine technische Ladeinformation des Elektrofahrzeugs (3), einen das Ermitteln der Fahrstrecke (50) betreffenden Routenparameter und/oder einen Wegepunkt (502) der Fahrstrecke (50) umfasst.

12. Verfahren nach einem der Ansprüche 1 bis 11, bei dem der stationäre zentrale Vergabeserver (1) von der Ladestation (4) eine technische Ladeinformation der Ladestation (4) und/oder einen aktuellen Betriebsstatus der Ladestation (4) empfängt und abhängig von der empfangenen technischen Ladeinformation und/oder dem empfangenen aktuellen Betriebsstatus die Ladestation (4) und das Ladezeitfenster (40) ermittelt.

13. Verfahren nach einem der Ansprüche 1 bis 12, bei dem das Ermitteln der Fahrstrecke (50) ein Modifizieren einer Fahrstrecke (50) abhängig von der gebuchten Ladestation (4) umfasst und/oder bei dem die Fahrstrecke (50) abhängig von einer Konfiguration automatisch oder abhängig von einer Eingabe manuell bestimmt wird.

14. Stationärer zentraler Vergabeserver (1), der konfiguriert ist, zusammen mit einer Ladestation (4), einem Elektrofahrzeug (3) und einem Mobilfunknetz (2) ein Verfahren nach einem der Ansprüche 1 bis 13 auszuführen.

15. Computerprogrammprodukt, umfassend ein digitales Speichermedium mit einem Programmcode, der eine Rechenvorrichtung veranlasst, als der stationäre zentrale Vergabeserver (1) zusammen mit einer Ladestation (4), einem Elektrofahrzeug (3) und einem Mobilfunknetz (2) ein Verfahren nach einem der Ansprüche 1 bis 13 auszuführen, wenn der Programmcode von der Rechenvorrichtung ausgeführt wird.
